# EUROPÄISCHE PATENTANMELDUNG

(11) **EP 4 386 916 A1**
(43) Veröffentlichungstag der Anmeldung: **19.06.2024**
(21) Anmeldenummer: 22212861.3
(22) Anmeldetag: 12.12.2022
(51) Int. Cl.: H01M 10/04, H01M 10/0525, H01M 10/0583, H01M 10/0585, H01M 10/0587

(54) **VERBESSERTES VERFAHREN ZUM HERSTELLEN VON ZELLSTACKS MITTELS GLEICHMÄSSIGER THERMISCHER AKTIVIERUNG EINES KLEBERS**

(71) Anmelder: Cellforce Group GmbH, 72072 Tübingen (DE)
(72) Erfinder: GRÄF, Markus, 72072 Tübingen (DE)

(57) **Zusammenfassung**

Die Erfindung betrifft ein Verfahren zum Herstellen eines Zellstacks, insbesondere für einen elektrochemischen Speicher, wobei zumindest Anodenelektroden, Separator-Schichten und Kathodenelektroden wiederholt übereinander gestapelt oder gefaltet oder gewickelt werden, wobei zumindest eine Schicht einseitig oder beidseitig mit einem thermisch aktivierbaren Kleber beschichtet oder mit dem Kleber versehen ist, wobei elektrisch leitfähige Schichten, insbesondere die Anodenelektroden und/oder die Kathodenelektroden, elektromagnetisch und/oder elektrisch erwärmt werden, wobei durch die Erwärmung der elektrisch leitfähigen Schichten der Kleber thermisch aktiviert wird und insbesondere die Anodenelektroden, Separator-Schichten und Kathodenelektroden zu einem Zellstack miteinander verbunden werden. Des Weiteren betrifft die Erfindung eine Vorrichtung zum Herstellen von Zellstacks und einen elektrochemischen Speicher mit mindestens einem Zellstack.

## Beschreibung

Die Erfindung betrifft ein Verfahren zum Herstellen eines Zellstacks, insbesondere für einen elektrochemischen Speicher, wobei zumindest Anodenelektroden, Separator-Schichten und Kathodenelektroden wiederholt übereinander gestapelt oder gefaltet oder gewickelt werden. Des Weiteren betrifft die Erfindung eine Vorrichtung zum Herstellen von Zellstacks und einen elektrochemischen Speicher mit mindestens einem Zellstack.

Bei der Herstellung von elektrochemischen Speichern, wie beispielsweise einer Lithiumlonen-Batterien, werden üblicherweise mehrere, einander abwechselnde, Lagen bzw. Schichten von Anoden, Kathoden und Separatoren in Form von Zellstacks angeordnet. Diese Schichten sind mit einem thermisch aktivierbaren Kleber versehen und werden anschließend unter Wärme- und Krafteinwirkung miteinander verklebt. Hierzu werden die Schichten zwischen zwei Heizplatten positioniert, die auf die Vielzahl von Schichten einwirken.

Die Aufheizung der Schichten des Zellstacks über die Heizplatten resultiert jedoch in einer inhomogenen Temperaturverteilung entlang der Höhe bzw. Dicke des Zellstacks. Die gleichmäßige Verklebung zwischen den Schichten des Zellstacks und auch die Verklebung aller Schichten des Zellstacks mit Hilfe des thermisch aktivierbaren Klebers kann durch die inhomogene Temperaturverteilung nicht gewährleistet werden. Darüber hinaus wird die vollständige Erwärmung aller Schichten des Zellstacks durch die elektrisch und thermisch isolierenden Eigenschaften der Separator-Schichten verzögert, wodurch die Ausbringung einer Anlage bei der Herstellung von Zellstacks limitiert ist.

Es sind bereits Verfahren bekannt, die die Schichten des Zellstacks während der Erwärmung mit einer größeren Kraft miteinander verpressen oder die Schichten mit einer höheren Temperatur beaufschlagen, um eine Beschleunigung des Klebevorgangs zu erzielen. Derartige Maßnahmen können sich jedoch nachteilig auf die Materialeigenschaften der Zellkomponenten bzw. der jeweiligen Schichten des Zellstacks auswirken.

Die vorliegende Erfindung hat daher die Aufgabe, ein Verfahren zum Herstellen von Zellstacks, insbesondere für einen elektrochemischen Speicher, zu schaffen, welches eine schnelle und gleichmäßige Verklebung der Schichten des Zellstacks ermöglicht. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Herstellen eines Zellstacks bereitgestellt. Der Zellstack ist insbesondere für einen elektrochemischen Speicher, wie beispielsweise eine Lithium-Ionen-Zelle, vorgesehen. Ein derartiger Zellstack besteht aus einer Vielzahl von Anodenelektroden, Separator-Schichten und Kathodenelektroden, die wiederholt übereinander gestapelt oder gefaltet oder gewickelt werden. Darüber hinaus können weitere Schichten, die beispielsweise Graphit oder andere Materialien enthalten, vorgesehen sein.

Eine Anodenelektrode kann beispielsweise aus einer Kupferfolie bzw. einer Kupferträgerfolie bestehen, welche einseitig oder beidseitig mit einem Anodensubstrat beschichtet ist. Analog hierzu kann eine Kathodenelektrode kann beispielsweise aus einer Aluminiumfolie bzw. einer Aluminiumträgerfolie bestehen, welche einseitig oder beidseitig mit einem Kathodensubstrat beschichtet ist.

Der Einfachheit halber werden die zusätzlich möglichen Schichten, die im Bereich der Lithium-Ionen-Batterien üblich sind nicht weiter beschrieben. Zum Ausbilden eines integralen bzw. einteiligen Zellstacks werden Klebeschichten verwendet oder bestimmte Schichten mit einem Kleber im Vorfeld versehen. Beispielsweise werden die Separator-Schichten einseitig oder beidseitig mit einem thermisch aktivierbaren Kleber beschichtet oder mit dem Kleber versehen.

Nach dem bereitstellen der angeordneten Anodenelektroden, Separator-Schichten und Kathodenelektroden werden elektrisch leitfähige Schichten, insbesondere die Kupferfolien und Aluminiumfolien der Anodenelektroden und/oder der Kathodenelektroden und/oder zusätzliche Schichten oder Gitter, elektromagnetisch und/oder elektrisch erwärmt. Im Unterschied zum Stand der Technik, bei dem von außen eine Wärmequelle gegen den Zellstack gepresst wird und die Wärme sich von außen nach innen langsam ausbreitet, wird nun in allen elektrisch leitfähigen Schichten des Zellstacks direkt Wärme erzeugt. Eine zeitaufwändige und ungleichmäßige Wärmeleitung kann durch diese Maßnahme beseitigt werden. Durch die Erwärmung der Anodenelektroden und/oder der Kathodenelektroden wird der Kleber der jeweiligen Separator-Schichten direkt bzw. unmittelbar thermisch aktiviert. Durch die thermische Aktivierung des Klebers werden die Anodenelektroden, Separator-Schichten und Kathodenelektroden zu einem einteiligen Zellstack miteinander verbunden. Hierdurch wird ein beispielhafter Zellstack fertiggestellt.

Je nach Ausgestaltung des Verfahrens und der Anforderungen können zusätzliche Bearbeitungsschritte, wie beispielsweise elektrische Anbindung von Kontaktfahnen, Einstellen der finalen Abmessungen, Aufbringen von Beschichtungen oder Verpackungen, Anordnen von Positionierungshilfen und dergleichen, folgen oder im Rahmen des Verfahrens umgesetzt werden.

Gemäß einem weiteren Aspekt der Erfindung wird eine Vorrichtung zum Herstellen von Zellstacks bereitgestellt. Die Vorrichtung ist dazu eingerichtet, das erfindungsgemäße Verfahren auszuführen. Hierzu kann die Vorrichtung einen Aufnahmeraum zum Aufnehmen von mindestens einem Bündel von Schichten, die zu einem Zellstack zusammengefügt werden. Des Weiteren ist mindestens eine Wärmequelle vorgesehen, welche elektromagnetisch oder elektrisch eine Wärme in die elektrisch leitfähigen Schichten des Bündels induzieren kann. Je nach Ausgestaltung der Vorrichtung kann eine Pressvorrichtung mit einem Unterwerkzeug und einem Oberwerkzeug eingesetzt werden, um eine Anpresskraft auf die Schichten auszuüben. Eine Steuereinheit kann dazu eingesetzt werden, die Erzeugung von Wärme und die Bereitstellung einer Anpresskraft durch die Pressvorrichtung, beispielsweise basierend auf Messdaten von Sensoren, zu steuern und zu regeln.

Nach einem weiteren Aspekt der Erfindung wird ein elektrochemischer Speicher bereitgestellt. Der elektrochemische Speicher weist mindestens ein Zellgehäuse auf und kann beispielsweise als eine Batteriezelle basierend auf einer Lithium-Ionen-Technologie ausgestaltet sein. In dem Zellgehäuse ist mindestens ein Zellstack angeordnet, welcher gemäß dem erfindungsgemäßen Verfahren hergestellt ist. Der durch das Verfahren hergestellte Zellstack ist nicht auf die Lithium-Ionen-Technologie beschränkt und kann entsprechend in einer Vielzahl von unterschiedlichen elektrochemischen Zellen eingesetzt werden, welche einen einteilig gefügten Zellstack mit vielen Lagen erfordern.

Durch die interne Freisetzung von Wärme zur thermischen Aktivierung des Klebers kann die Erwärmungszeit, bis der Kleber seine Klebeeigenschaften entwickelt, gesenkt werden. Darüber hinaus kann durch ein Induzieren der Wärme in die elektrisch leitfähigen Schichten ein homogenerer Temperaturverlauf, entlang einer lateralen Richtung bzw. innerhalb der Schichten als auch entlang einer Dicke des Zellstacks, realisiert werden. Durch den homogenen Temperaturverlauf im Zellstack werden die äußeren Schichten thermisch nicht oder minimal stärker beansprucht als die inneren Schichten. Die nachteilige Veränderung von Materialeigenschaften der Schichten des Zellstacks kann hierdurch verhindert werden.

Der thermisch aktivierbare Kleber kann als ein Schmelzklebstoff, beispielsweise auf Polyurethan-Basis, ausgestaltet sein, welcher unterhalb einer Temperaturschwelle ausgehärtet ist und oberhalb der Temperaturschwelle klebrig bzw. klebend ausgestaltet ist. Alternativ kann ein zwei-Komponenten-Kleber mit einem thermisch aktivierbaren Härter als ein thermisch aktivierbarer Kleber verwendet werden. Der Härter wird dabei mit zunehmender Temperatur verflüssigt und kann anschließend mit dem Harz reagieren. Beispielsweise kann der thermisch aktivierbare Kleber als PVDF (Polyvinylidenfluorid) ausgestaltet sein.

Die elektrisch leitenden Schichten des Zellstacks können besonders effizient erwärmt werden, wenn mindestens eine Magnetspule den Anodenelektroden und/oder Kathodenelektroden benachbart angeordnet wird. Dabei wird die Magnetspule zum Erzeugen von einem sich zeitlich veränderlichen Magnetfeld angesteuert, durch welches die Anodenelektroden und/oder die Kathodenelektroden induktiv erwärmt werden. Dabei werden insbesondere die Bestandteile der Anodenelektroden und/oder der Kathodenelektroden erwärmt, welche eine hohe elektrische Leitfähigkeit aufweisen. Zum Beispiel können derartige Bestandteile die Kupferfolien und Aluminiumfolien sein.

Die Verwendung von mehreren Magnetspulen kann abhängig von den Abmessungen des Zellstacks vorteilhaft sein, um eine gleichmäßige Induktion von Wirbelströmen in den elektrisch leitenden Schichten zu erzeugen. Die Anodenelektroden und/oder die Kathodenelektroden weisen üblicherweise Aluminium- und Kupferträgerfolien auf, die in entsprechende Anodensubstrate und Kathodensubstrate eingebettet bzw. eingebunden sind. Die Aluminium- und Kupferträgerfolien aufgrund ihrer hohen elektrischen Leitfähigkeit besonders schnell und effizient induktiv erwärmt werden.

Vorteilhafterweise kann die Magnetfeldrichtung des durch die Spule erzeugten Magnetfelds senkrecht auf eine Ebene der Schichten auftreffen bzw. parallel zu einer Flächennormale ausgerichtet sein. Somit kann gemäß der dritten maxwellschen Gleichung ein resultierender Wirbelstrom als Folge des sich zeitlich verändernden Magnetfelds in die elektrisch leitenden Schichten induziert werden. Die induzierten Wirbelströme weisen jedoch eine Verlustleistung auf, die sich in Form einer Erwärmung jeder einzelnen Folie der Anodenelektroden und Kathodenelektroden auswirkt. Die Wirbelströme werden vorzugsweise in allen elektrisch leitfähigen Schichten des Zellstacks entsprechend der Höhe der zeitlichen Magnetfeldveränderung induziert.

Gemäß einem weiteren Ausführungsbeispiel werden die Anodenelektroden und/oder die Kathodenelektroden, insbesondere die Kupferfolien und Aluminiumfolien, an mindestens zwei Kontaktpositionen durch mindestens eine Stromquelle elektrisch kontaktiert und mit einem konstanten oder variierenden Strom beaufschlagt, um eine Erwärmung der Anodenelektroden und/oder Kathodenelektroden durch joulesche Wärme zu bewirken. Durch diese alternative oder zusätzliche Maßnahme können die elektrisch leitfähigen Schichten durch eine direkte Beaufschlagung mit Strom und einer resultierenden Erzeugung von Verlustleistung erwärmt werden, um den Kleber thermisch zu aktivieren.

Nach einer weiteren Ausführungsform werden die Anodenelektroden, die Kathodenelektroden und die Separator-Schichten in einer Pressvorrichtung positioniert, Vorteilhafterweise werden die Anodenelektroden, die Kathodenelektroden und die Separator-Schichten durch die Pressvorrichtung mit einer konstanten oder einer sich zeitlich verändernden Kraft zusammengepresst während der Kleber der Separator-Schichten thermisch aktiviert wird oder nachdem der Kleber der Separator-Schichten thermisch aktiviert wurde. Durch die Aufbringung der Anpresskraft der Pressvorrichtung kann ein finales Klebeergebnis sichergestellt werden. Dabei kann eine zeitliche Variation der Anpresskraft eine besonders präzise Steuerung der Klebeeigenschaften des Klebers ermöglichen.

Der Zellstack kann besonders gleichmäßig erwärmt werden, wenn die Anodenelektroden und/oder die Kathodenelektroden durch mindestens zwei in einem Oberwerkzeug und/oder Unterwerkzeug der Pressvorrichtung integrierte Magnetspulen induktiv erwärmt werden. Dabei erfolgt die Erwärmung beispielsweise durch Induktion von Wirbelströmen in die Kupferfolien und Aluminiumfolien der jeweiligen Elektroden.

Gemäß einem weiteren Ausführungsbeispiel weist die Vorrichtung eine Leitvorrichtung zum zumindest bereichsweisen Leiten des durch die Magnetspulen erzeugten Magnetfelds auf, wobei das durch die Magnetspulen erzeugte Magnetfeld über einen oberen Abschnitt der Leitvorrichtung an dem Oberwerkzeug, über einen unteren Abschnitt der Leitvorrichtung an dem Unterwerkzeug und über zwei seitliche Abschnitte der Leitvorrichtung geleitet wird. Die Leitvorrichtung bzw. die jeweiligen Abschnitte der Leitvorrichtung können beispielsweise einen äußeren Abschnitt eines Spulenkerns bzw. Magnetkerns ausbilden, welcher zum Leiten von äußeren Magnetfeldlinien dient. Die unmittelbar durch die Magnetspulen erzeugten Magnetfeldlinien können durch die Schichten des Zellstacks fließen und werden außerhalb des Zellstacks über die Abschnitte der Leitvorrichtung umgelenkt bzw. geführt.

Die Abschnitte der Leitvorrichtung können sich elektrisch leitend berühren oder voneinander beabstandet sein. Darüber hinaus können die Abschnitte der Leitvorrichtung aus einer ferromagnetischen Metalllegierung bestehen. Zum Reduzieren von Wirbelstromverlusten in der Leitvorrichtung können die Abschnitte der Leitvorrichtung in Form eines Blechpakets hergestellt sein. Durch diese Maßnahme kann der magnetische Rückschluss gesteuert und der Betrieb der Magnetspule besonders energieeffizient erfolgen.

Je nach Ausgestaltung können die Abschnitte der Leitvorrichtung durch Luft oder eine Flüssigkeit gekühlt werden. Analog hierzu kann die mindestens eine Magnetspule luftgekühlt oder flüssiggekühlt ausgestaltet sein.

Die Vorrichtung zum Herstellen von Zellstacks kann besonders flexibel aufgebaut sein, wenn das durch die mindestens eine Magnetspule erzeugte Magnetfeld über die zwei seitlichen Abschnitte der Leitvorrichtung geleitet wird, welche sich in Anpressrichtung zwischen dem oberen Abschnitt und dem unteren Abschnitt oder seitlich neben dem oberen Abschnitt und dem unteren Abschnitt der Leitvorrichtung angeordnet sind. Eine derartige Anordnung der Abschnitte der Leitvorrichtung ermöglicht ein flexibles Einsetzen des Zellstacks in den Aufnahmeraum. Beispielsweise kann ein Oberwerkzeug mit dem oberen Abschnitt oder ein seitlicher Abschnitt entfernt werden, um ein Bündel aus Schichten in dem Aufnahmeraum zum Herstellen eines Zellstacks anzuordnen und nach dem Fügeprozess den Zellstack aus dem Aufnahmeraum zu entnehmen.

Nach einer weiteren Ausführungsform wird während der thermischen Aktivierung des Klebers entlang zumindest einer Anoden-Schicht und/oder Kathoden-Schicht eine Temperatur durch eine Temperaturmessvorrichtung gemessen. Die Verwendung der Temperaturmessvorrichtung und eine entsprechende Anbindung der Temperaturmessvorrichtung an die Steuereinheit ermöglicht eine präzise Steuerung der Erwärmung in den elektrisch leitfähigen Schichten des Zellstacks. Entsprechend kann die mindestens eine Magnetspule basierend auf den durch die Temperaturmessvorrichtung ermittelten Messdaten geregelt und überwacht werden.

Die Temperaturmessvorrichtung kann besonders vielseitig umgesetzt werden, wenn die Temperatur direkt durch mindestens ein Thermoelement und/oder einen Messwiderstand der Temperaturmessvorrichtung gemessen wird. Bei einer alternativen Ausgestaltung wird die Temperatur indirekt durch eine elektrische Leitfähigkeitsmessung von mindestens einer Anoden-Schicht und/oder Kathoden-Schicht durch die Temperaturmessvorrichtung gemessen. Hierdurch kann die Temperatur besonders präzise entlang der gesamten Breite oder Länge einer Schicht ermittelt werden.

Nachstehend werden mehrere Ausführungsbeispiele der Erfindung anhand der Zeichnungen näher erläutert. Es zeigen:
Fig. 1 eine schematische Schnittdarstellung einer Vorrichtung zum Herstellen von Zellstacks zum Veranschaulichen eines Verfahrens gemäß einer Ausführungsform der Erfindung,
Fig. 2 eine schematische Schnittdarstellung einer Vorrichtung zum Herstellen von Zellstacks gemäß einer zweiten Ausführungsform,
Fig. 3 eine schematische Schnittdarstellung einer Vorrichtung zum Herstellen von Zellstacks gemäß einer dritten Ausführungsform,
Fig. 4 eine schematische Schnittdarstellung eines elektrochemischen Speichers mit einem Zellstack, und
Fig. 5 eine schematische Detailansicht der in Fig. 4 gezeigten Schnittdarstellung zum Veranschaulichen einer Zusammensetzung des Zellstacks.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

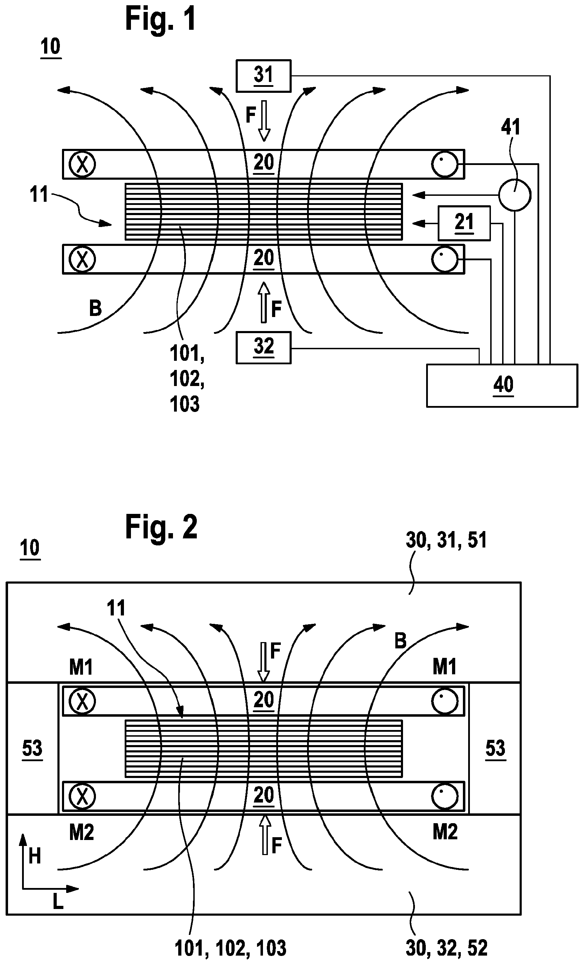

Die Fig. 1 zeigt eine schematische Schnittdarstellung einer Vorrichtung 10 zum Herstellen von Zellstacks 100 zum Veranschaulichen eines Verfahrens gemäß einer Ausführungsform der Erfindung. Dabei ist die Vorrichtung 10 gemäß einer ersten Ausführungsform dargestellt.

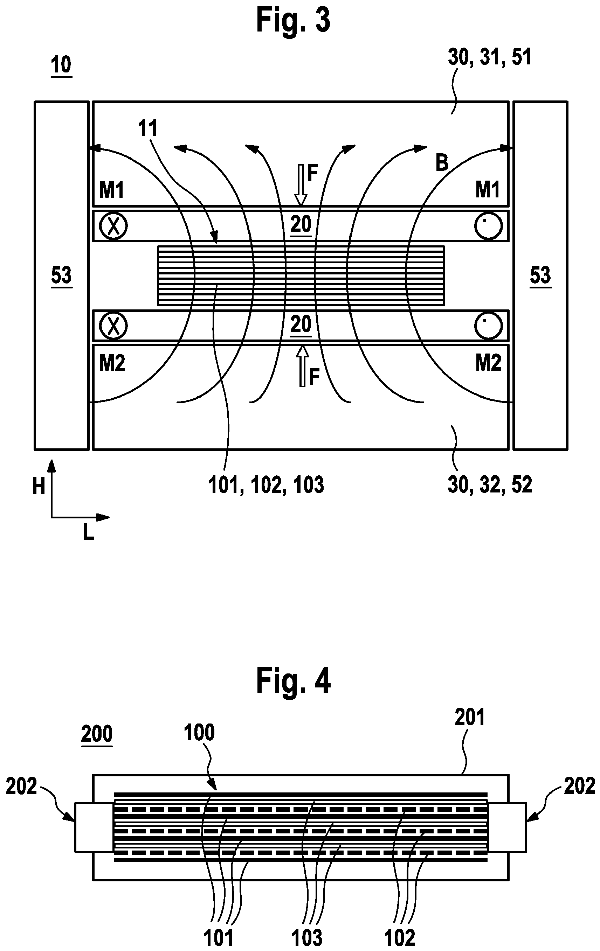

Der durch das Verfahren herzustellende Zellstack 100 ist insbesondere für einen elektrochemischen Speicher 200, wie beispielsweise eine Lithium-Ionen-Zelle, vorgesehen, welche in der Fig. 4 gezeigt ist. Ein derartiger Zellstack 100 besteht in der dargestellten Ausführungsform aus einer Vielzahl von Anodenelektroden 101, Separator-Schichten 103 und Kathodenelektroden 102, die wiederholt übereinander gestapelt oder gefaltet oder gewickelt werden.

Zum Ausbilden eines integralen bzw. einteiligen Zellstacks 100 werden nicht dargestellte Klebeschichten verwendet oder bestimmte Schichten mit einem Kleber im Vorfeld versehen. Beispielsweise werden die Separator-Schichten 103 einseitig oder beidseitig mit einem thermisch aktivierbaren Kleber beschichtet oder mit dem Kleber benetzt. Je nach Ausgestaltung des Verfahrens können beliebige Schichten 101, 102, 103 mit dem thermisch aktivierbaren Kleber versehen sein. Die Verwendung des Klebers in Verbindung mit Separator-Schichten 103 dient hier der Veranschaulichung des Verfahrens.

In einem ersten Schritt des Verfahrens werden die Schichten 101, 102, 103 des Zellstacks 100 in einem Aufnahmeraum 11 der Vorrichtung 10 platziert. Die jeweiligen Schichten 101, 102, 103 sind relativ zueinander ausgerichtet und können temporär mit Klammern, Gerüsten oder durch den Aufnahmeraum 11 gegen ein unbeabsichtigtes Verrutschen geschützt sein. Die jeweiligen Schichten 101, 102, 103 des Zellstacks 100 sind in der Fig. 4 beispielhaft im Detail dargestellt.

Der Aufnahmeraum 11 der Vorrichtung ist dazu eingerichtet, mindestens ein Bündel von Schichten 101, 102, 103, die zu einem Zellstack 100 zusammengefügt werden sollen, aufzunehmen. Des Weiteren ist mindestens eine Wärmequelle 20, 21 vorgesehen, welche elektromagnetisch 20 und/oder elektrisch 21 eine Wärme in die elektrisch leitfähigen Schichten 101, 102 des Bündels induzieren kann. Somit werden nach dem Bereitstellen der Schichten 101, 102, 103 die elektrisch leitfähigen Schichten 101, 102, die im dargestellten Ausführungsbeispiel als Anodenelektroden 101 und/oder Kathodenelektroden 102 ausgestaltet sind, in einem weiteren Schritt des Verfahrens elektromagnetisch und/oder elektrisch erwärmt.

Im dargestellten Ausführungsbeispiel weist die Vorrichtung 10 eine Pressvorrichtung 30 mit einem Unterwerkzeug 31 und einem Oberwerkzeug 32 auf, um eine Anpresskraft F auf die Schichten 101, 102, 103 auszuüben. Eine Steuereinheit 40 wird dazu eingesetzt, die Erzeugung von Wärme durch die Wärmequellen 20, 21 und die Bereitstellung einer Anpresskraft durch die Pressvorrichtung 30, beispielsweise basierend auf Messdaten von Sensoren, zu steuern und zu regeln. Dabei ist schematisch eine Temperaturmessvorrichtung 41 gezeigt, um die Temperatur der Schichten 101, 102, 103 direkt oder indirekt zu ermitteln. Dabei kann die Temperaturmessvorrichtung 41 über thermische Sensoren und/oder elektrische Sensoren die Temperatur der Schichten 101, 102, 103 messen. Die thermischen Sensoren können dabei basierend auf einem direkten Kontakt mit den Schichten 101, 102, 103 oder basierend auf einer kontaktlosen Messung, beispielsweise mittels Aufzeichnung von Infrarotstrahlen, die Temperatur ermitteln.

Zum Erzeugen einer gleichmäßigen Erwärmung in den elektrisch leitfähigen Schichten 101, 102 kann die Steuereinheit 40 zwei Magnetspulen 20 zum Erzeugen von einem sich zeitlich veränderlichen Magnetfeld B ansteuern, durch welches die Anodenelektroden 101 und/oder die Kathodenelektroden 102 induktiv erwärmt werden. Die Feldlinien des resultierenden Magnetfelds B sind durch die Pfeile in der Fig. 1, Fig. 2 und Fig. 3 veranschaulicht.

Alternativ oder zusätzlich können die Anodenelektroden 101 und/oder die Kathodenelektroden 102 an mindestens zwei Kontaktpositionen durch mindestens eine Stromquelle 21 elektrisch kontaktiert und mit einem konstanten oder variierenden Strom beaufschlagt werden, um eine Erwärmung der Anodenelektroden 101 und/oder Kathodenelektroden 102 durch joulesche Wärme zu bewirken. Die Stromquelle 21 kann hierbei ebenfalls durch die Steuereinheit 40 angesteuert werden.

Durch die Erwärmung der Anodenelektroden 101 und/oder die Kathodenelektroden 102 wird der Kleber der jeweiligen Separator-Schichten 103 direkt bzw. unmittelbar thermisch aktiviert. Durch die thermische Aktivierung des Klebers werden die Anodenelektroden 101, Separator-Schichten 103 und Kathodenelektroden 102 zu einem einteiligen Zellstack 100 miteinander verbunden. Durch diesen Schritt kann der Zellstack 100 fertiggestellt sein. Je nach Ausgestaltung des Verfahrens und der Anforderungen können zusätzliche Bearbeitungsschritte, wie beispielsweise elektrische Anbindung von Kontaktfahnen, Einstellen der finalen Abmessungen, Aufbringen von Beschichtungen oder Verpackungen, Anordnen von Positionierungshilfen und dergleichen, folgen oder im Rahmen des Verfahrens umgesetzt werden.

Die Fig. 2 zeigt eine schematische Schnittdarstellung einer Vorrichtung 10 zum Herstellen von Zellstacks 100 gemäß einer zweiten Ausführungsform. Im Unterschied zum in Fig. 1 gezeigten Ausführungsbeispiel ist hier eine Vorrichtung 10 dargestellt, die eine Leitvorrichtung 50 zum zumindest bereichsweisen Leiten des durch die Magnetspulen 20 erzeugten Magnetfelds B aufweist. Hierzu weist die Leitvorrichtung 50 einen oberen Abschnitt 51, einen unteren Abschnitt 52 und zwei seitliche Abschnitte 53 auf.

Der obere Abschnitt 51 ist in das Oberwerkzeug 31 der Pressvorrichtung 30 integriert. Der untere Abschnitt 52 ist in der Unterwerkzeug 32 der Pressvorrichtung 30 eingebracht. Die seitlichen Abschnitte 53 der Leitvorrichtung 50 sind seitlich neben dem oberen Abschnitt 51 und dem unteren Abschnitt 52 positioniert und bilden eine im Wesentlichen geschlossene Schleife für den magnetischen Rückfluss aus. Der Aufnahmeraum 11 befindet sich im dargestellten Ausführungsbeispiel mittig innerhalb dieser Schleife.

Im dargestellten Ausführungsbeispiel sind die seitlichen Abschnitte 53 entlang einer Dicke bzw. in Höhenrichtung H zwischen dem oberen Abschnitt 51 und dem unteren Abschnitt 52 positioniert. Die Höhenrichtung H entspricht im dargestellten Ausführungsbeispiel der Anpressrichtung.

In der Fig. 3 ist eine schematische Schnittdarstellung einer Vorrichtung 10 zum Herstellen von Zellstacks 100 gemäß einer dritten Ausführungsform gezeigt. Im Unterschied zur in Fig. 2 gezeigten Vorrichtung 10 sind die seitlichen Abschnitte 53 der Leitvorrichtung 50 entlang einer lateralen Richtung L seitlich zu dem oberen Abschnitt 51 und dem unteren Abschnitt 52 versetzt. Hierdurch können das Oberwerkzeug 31 und das Unterwerkzeug 32 relativ zu den seitlichen Abschnitten 32 frei entlang der Höhenrichtung H bewegt werden.

Der Übersicht halber sind die Steuereinheit 40 und die Temperaturmessvorrichtung 41 in der Fig. 2 und Fig. 3 nicht dargestellt.

Die Fig. 4 zeigt eine schematische Schnittdarstellung eines elektrochemischen Speichers 200 mit einem einteilig gefügten Zellstack 100. Der elektrochemische Speicher 200 weist hier ein Zellgehäuse 201 auf und kann beispielsweise als eine Batteriezelle basierend auf einer Lithium-Ionen-Technologie ausgestaltet sein. In dem Zellgehäuse 201 ist mindestens ein einteiliger Zellstack 100 angeordnet, welcher gemäß dem erfindungsgemäßen Verfahren hergestellt ist. Der Zellstack 100 ist beispielhaft an zwei gegenüberliegenden Seiten durch Pole 202, 203 elektrisch kontaktiert.

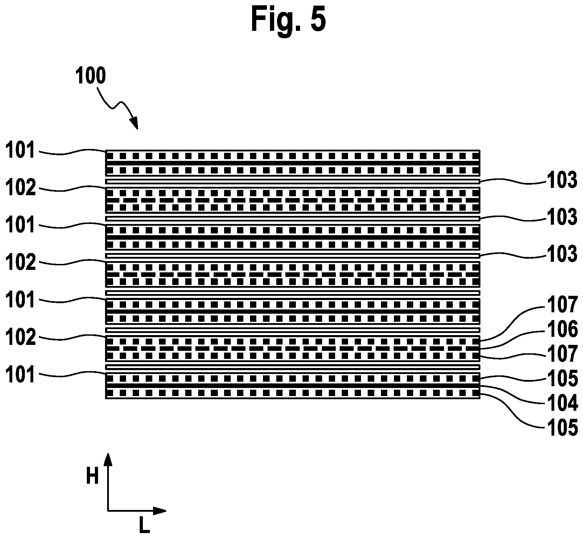

In der Fig. 5 ist eine schematische Detailansicht der in Fig. 4 gezeigten Schnittdarstellung zum Veranschaulichen einer Zusammensetzung eines Zellstacks 100 gezeigt. Der Zellstack 100 weist eine Vielzahl von Anodenelektroden 101, Separator-Schichten 103 und Kathodenelektroden 102 auf, die wiederholt übereinander gestapelt oder gefaltet oder gewickelt sind und durch das bereits beschriebene Verfahren miteinander verbunden wurden.

Im dargestellten Ausführungsbeispiel weist jede Anodenelektrode 101 eine Kupferfolie 104 bzw. Kupferträgerfolie auf, welche beidseitig mit einem Anodensubstrat 105 beschichtet ist.

Analog weist jede Kathodenelektrode 102 eine Aluminiumfolie 106 bzw. Aluminiumträgerfolie auf, welche beidseitig mit einem Kathodensubstrat 107 beschichtet ist.

Der Zellstack 100 ist entlang der Höhenrichtung H beidseitig durch Anodenelektroden 101 abgeschlossen, wobei die Anodenelektroden 101, Separator-Schichten 103 und Kathodenelektroden 102 im Verlauf der Höhenrichtung sich sukzessive abwechseln.

## Patentansprüche

1. Verfahren zum Herstellen eines Zellstacks (100), insbesondere für einen elektrochemischen Speicher (200), wobei zumindest Anodenelektroden (101), Separator-Schichten (103) und Kathodenelektroden (102) wiederholt übereinander gestapelt oder gefaltet oder gewickelt werden, wobei zumindest eine Schicht (101, 102, 103) einseitig oder beidseitig mit einem thermisch aktivierbaren Kleber beschichtet oder mit dem Kleber versehen ist, wobei elektrisch leitfähige Schichten (101, 102), insbesondere die Anodenelektroden (101) und/oder die Kathodenelektroden (102), elektromagnetisch und/oder elektrisch erwärmt werden, wobei durch die Erwärmung der elektrisch leitfähigen Schichten (101, 102) der Kleber thermisch aktiviert wird und insbesondere die Anodenelektroden (101), Separator-Schichten (103) und Kathodenelektroden (102) zu einem einteiligen Zellstack (100) miteinander verbunden werden.

2. Verfahren nach Anspruch 1, wobei mindestens eine Magnetspule (20) den Anodenelektroden (101) und/oder Kathodenelektroden (102) benachbart angeordnet wird, wobei die Magnetspule (20) zum Erzeugen von einem sich zeitlich veränderlichen Magnetfeld (B) angesteuert wird, durch welches die Anodenelektroden (101) und/oder die Kathodenelektroden (102) induktiv erwärmt werden.

3. Verfahren nach Anspruch 1 oder 2, wobei die Anodenelektroden (101) und/oder die Kathodenelektroden (102) an mindestens zwei Kontaktpositionen durch mindestens eine Stromquelle (20) elektrisch kontaktiert und mit einem konstanten oder variierenden Strom beaufschlagt werden, um eine Erwärmung der Anodenelektroden (101) und/oder Kathodenelektroden (102) durch joulesche Wärme zu bewirken.

4. Verfahren nach einem der Ansprüche 1 bis 3, wobei die Anodenelektroden (101), die Kathodenelektroden (102) und die Separator-Schichten (103) in einer Pressvorrichtung (30) positioniert werden, wobei die Anodenelektroden (101), die Kathodenelektroden (102) und die Separator-Schichten (103) durch die Pressvorrichtung (30) mit einer konstanten oder einer sich zeitlich verändernden Anpresskraft (F) zusammengepresst werden während der Kleber thermisch aktiviert wird oder nachdem der Kleber thermisch aktiviert wurde.

5. Verfahren nach Anspruch 2 und Anspruch 4, wobei die Anodenelektroden (101) und/oder die Kathodenelektroden (102) durch mindestens eine in einem Oberwerkzeug (31) und/oder Unterwerkzeug (32) der Pressvorrichtung (30) integrierte Magnetspule (20) induktiv erwärmt werden.

6. Verfahren nach Anspruch 5, wobei eine Leitvorrichtung (50) zum zumindest bereichsweisen Leiten des durch die Magnetspule (20) erzeugten Magnetfelds (B) aufweist, wobei das durch die Magnetspule (20) erzeugte Magnetfeld (B) über einen oberen Abschnitt (51) der Leitvorrichtung (50) an dem Oberwerkzeug (31), über einen unteren Abschnitt (52) der Leitvorrichtung (50) an dem Unterwerkzeug (32) und über zwei seitliche Abschnitte (53) der Leitvorrichtung (50) geleitet wird.

7. Verfahren nach Anspruch 6, wobei das durch die mindestens eine Magnetspule (20) erzeugte Magnetfeld (B) über die zwei seitlichen Abschnitte (53) der Leitvorrichtung (50) geleitet wird, welche sich in Anpressrichtung zwischen dem oberen Abschnitt (51) und dem unteren Abschnitt (52) oder seitlich neben dem oberen Abschnitt (51) und dem unteren Abschnitt (52) der Leitvorrichtung (50) angeordnet sind.

8. Verfahren nach einem der Ansprüche 1 bis 7, wobei während der thermischen Aktivierung des Klebers entlang zumindest einer Anoden-Schicht (101) und/oder Kathoden-Schicht (102) eine Temperatur durch eine Temperaturmessvorrichtung (41) gemessen wird.

9. Verfahren nach einem der Ansprüche 1 bis 8, wobei die Temperatur direkt durch mindestens ein Thermoelement und/oder einen Messwiderstand der Temperaturmessvorrichtung (41) gemessen wird;
oder die Temperatur indirekt durch eine elektrische Leitfähigkeitsmessung von mindestens einer Anoden-Schicht (101) und/oder Kathoden-Schicht (102 durch die Temperaturmessvorrichtung (41) gemessen wird.

10. Vorrichtung (10) zum Herstellen von Zellstacks (100), wobei die Vorrichtung (10) dazu eingerichtet ist, ein Verfahren gemäß einem der vorhergehenden Ansprüche auszuführen.

11. Elektrochemischer Speicher (200), aufweisend mindestens ein Zellgehäuse (201), wobei in dem Zellgehäuse (201) mindestens ein Zellstack (100) angeordnet ist, welcher gemäß einem Verfahren nach einem der Ansprüche 1 bis 9 hergestellt ist.

## Geänderte Patentansprüche

### Geänderte Patentansprüche gemäss Regel 137(2) EPÜ.

1. Verfahren zum Herstellen eines Zellstacks (100), insbesondere für einen elektrochemischen Speicher (200), wobei zumindest Anoden-Schichten (101), Separator-Schichten (103) und Kathoden-Schichten (102) wiederholt übereinander gestapelt oder gefaltet oder gewickelt werden, wobei zumindest eine Schicht (101, 102, 103) einseitig oder beidseitig mit einem thermisch aktivierbaren Kleber beschichtet oder mit dem Kleber versehen ist, wobei elektrisch leitfähige Schichten (101, 102), insbesondere die Anoden-Schichten (101) und/oder die Kathoden-Schichten (102), elektromagnetisch erwärmt werden, wobei durch die Erwärmung der elektrisch leitfähigen Schichten (101, 102) der Kleber thermisch aktiviert wird und insbesondere die Anoden-Schichten (101), Separator-Schichten (103) und Kathoden-Schichten (102) zu einem einteiligen Zellstack (100) miteinander verbunden werden.

2. Verfahren nach Anspruch 1, wobei mindestens eine Magnetspule (20) den Anoden-Schichten (101) und/oder Kathoden-Schichten (102) benachbart angeordnet wird, wobei die Magnetspule (20) zum Erzeugen von einem sich zeitlich veränderlichen Magnetfeld (B) angesteuert wird, durch welches die Anoden-Schichten (101) und/oder die Kathoden-Schichten (102) induktiv erwärmt werden.

3. Verfahren nach Anspruch 1 oder 2, wobei die Anoden-Schichten (101), die Kathoden-Schichten (102) und die Separator-Schichten (103) in einer Pressvorrichtung (30) positioniert werden, wobei die Anoden-Schichten (101), die Kathoden-Schichten (102) und die Separator-Schichten (103) durch die Pressvorrichtung (30) mit einer konstanten oder einer sich zeitlich verändernden Anpresskraft (F) zusammengepresst werden während der Kleber thermisch aktiviert wird oder nachdem der Kleber thermisch aktiviert wurde.

4. Verfahren nach Anspruch 2 oder 3, wobei die Anoden-Schichten (101) und/oder die Kathoden-Schichten (102) durch mindestens eine in einem Oberwerkzeug (31) und/oder Unterwerkzeug (32) der Pressvorrichtung (30) integrierte Magnetspule (20) induktiv erwärmt werden.

5. Verfahren nach Anspruch 4, wobei eine Leitvorrichtung (50) zum zumindest bereichsweisen Leiten des durch die Magnetspule (20) erzeugten Magnetfelds (B) aufweist, wobei das durch die Magnetspule (20) erzeugte Magnetfeld (B) über einen oberen Abschnitt (51) der Leitvorrichtung (50) an dem Oberwerkzeug (31), über einen unteren Abschnitt (52) der Leitvorrichtung (50) an dem Unterwerkzeug (32) und über zwei seitliche Abschnitte (53) der Leitvorrichtung (50) geleitet wird.

6. Verfahren nach Anspruch 5, wobei das durch die mindestens eine Magnetspule (20) erzeugte Magnetfeld (B) über die zwei seitlichen Abschnitte (53) der Leitvorrichtung (50) geleitet wird, welche sich in Anpressrichtung zwischen dem oberen Abschnitt (51) und dem unteren Abschnitt (52) oder seitlich neben dem oberen Abschnitt (51) und dem unteren Abschnitt (52) der Leitvorrichtung (50) angeordnet sind.

7. Verfahren nach einem der Ansprüche 1 bis 6, wobei während der thermischen Aktivierung des Klebers entlang zumindest einer Anoden-Schicht (101) und/oder Kathoden-Schicht (102) eine Temperatur durch eine Temperaturmessvorrichtung (41) gemessen wird.

8. Verfahren nach einem der Ansprüche 1 bis 7, wobei die Temperatur direkt durch mindestens ein Thermoelement und/oder einen Messwiderstand der Temperaturmessvorrichtung (41) gemessen wird;
oder die Temperatur indirekt durch eine elektrische Leitfähigkeitsmessung von mindestens einer Anoden-Schicht (101) und/oder Kathoden-Schicht (102) durch die Temperaturmessvorrichtung (41) gemessen wird.
